# EUROPEAN PATENT SPECIFICATION

(11) **EP 3 364 820 B1**
(45) Date of publication and mention of the grant of the patent: **06.09.2023**
(21) Application number: 16790815.1
(22) Date of filing: 19.10.2016
(51) Int. Cl.: A46B 15/00, A61C 17/22

(54) **INSTRUCTIONAL ORAL CARE DEVICES**
ANWEISENDE MUNDPFLEGEVORRICHTUNGEN
DISPOSITIFS POUR SOINS BUCCAUX REPOSANT SUR DES INSTRUCTIONS

(30) Priority: 22.10.2015 US 201514920809
(43) Date of publication of application: 29.08.2018
(73) Proprietor: Colgate-Palmolive Company, New York, NY 10022 (US)
(72) Inventor: BLOCH, Brian, Hillsborough, NJ 08844 (US); LIEBERWIRTH, Lars Ralf Rainer, 61479 Glashuetten (DE)
(74) Representative: Schicker, Silvia
(86) International application number: PCT/US2016/057619
(87) International publication number: WO 2017/070158

(56) References cited:
- US-A1- 2007 192 976
- US-A1- 2008 028 553
- US-A1- 2008 196 185

## Description

### BACKGROUND

Powered oral care implements, such as powered toothbrushes, are conventionally known. These implements generally include a power source disposed in a cavity in the toothbrush. The power source may be used to power an actuator or other electronic elements in the toothbrush. In some instances, the power source may be used to power a speaker or other audio transmission device, e.g., to play music or other audio while the user brushes her teeth. The audio may be used to promote proper use of the toothbrush. For example, some conventional toothbrushes provide an audible cue after a predetermined time. The cue may be a signal that some amount of time has elapsed. The user may react to the cue to brush the teeth in a different section of her mouth, for example. However, it may be beneficial to use a toothbrush with audio capabilities to promote proper brushing techniques.

US 2008/0196185 A1 relates to a plurality of algorithms for operation of a powered toothbrush. In a first algorithm, operation begins with a first step, where a user presses a button. Operation proceeds to a second step, where the toothbrush initiates a first timer period, energizes the motor and activates a first light pattern. Operation then proceeds to a third step, where the toothbrush determines if the first timer period has expired. If the first timer period has expired, operation proceeds to a fourth step, wherein a second timer period is started, the first light pattern is deactivated, and a second light pattern is activated. This general pattern repeats in further five steps so as to provide instruction for an entire prescribed brushing regimen. After that a last timer period has expired, the toothbrush deactivates the motor and performs a light show. A second algorithm differs from the first algorithm by way of processor providing signaling to pulse the motor between each of the timer periods, so that a user receives a tactile cue that a new brushing regimen interval has begun without having to interrupt the brushing to check whether a new light pattern has been engaged. A speaker can provide voice instructions during the respective intervals and, at the conclusion of brushing, the speaker can play music or give a congratulatory message.

US 2007/0192976 A1 relates to a method for transferring music from a signal source to a toothbrush assembly. The method includes: transferring a signal from an external source to a storage unit, inserting the storage unit into a toothbrush handle, and pressing a play button on the toothbrush. Time for playing the audio signal can correlate to the desired amount of time for a user to brush his teeth.

US 2008/0028553 A1 relates to a method for providing training on tooth brushing technique. The method utilizes a training toothbrush system with audio. The system includes speakers configured to transmit a plurality of coaching instructions pre-recorded within an audio microchip comprised in the system. The method comprises the following steps: applying toothpaste onto toothbrush bristles; powering the apparatus; following the pre-recorded coaching instructions throughout an entire duration envisioned to be approximately two minutes; rinsing off the bristles; storing appropriately; and repeat at appropriate time.

Accordingly, there is a need in the art for improved oral care devices having audio capability that may be used for training a user of the toothbrush. This disclosure is directed at providing such improved devices and/or overcoming one or more problems set forth above and/or other problems of the prior art.

### BRIEF SUMMARY

The invention is as defined in the appended claim. In aspects of this disclosure not according to the claimed invention, an oral care implement may be embodied as a toothbrush that includes an elongate body; a head disposed at a distal end of the body; one or more tooth cleaning elements at the head, movable relative to the body; a motor operably connected to the one or more tooth cleaning elements to move the one or more tooth cleaning elements; a controller for controlling the motor; a speaker disposed in the elongate body; a power source disposed in the elongate body; a speaker; and memory storing a plurality of tooth brushing instructions and a plurality of sound recordings containing praise. The controller is configured to perform acts including causing a first of the plurality of tooth brushing instructions to play, via the speaker, at least in part in response to a signal to commence a brushing sequence, upon completion of playing of the first of the plurality of tooth brushing instructions, causing movement, via driving the motor, of the one or more tooth cleaning elements for a first predetermined duration of time, causing cessation of movement of the one or more tooth cleaning elements after the first predetermined time, causing a first of the plurality of sound recordings containing praise to play, via the speaker, after the first predetermined time, causing a second of the plurality of tooth brushing instructions to play, via the speaker, after the causing the first of the plurality of sound recordings containing praise to play, causing movement of the one or more tooth cleaning elements for a second predetermined duration of time, after causing the second of the plurality of tooth brushing instructions to play, causing cessation of movement of the one or more tooth cleaning elements after the second predetermined time, and causing a second of the plurality of sound recordings containing praise to play, via the speaker, after the second predetermined time.

In one or more additional aspects not according to the claimed invention, in a toothbrush as described in the preceding paragraph, a manual switch is operable between a first position closing an electrical circuit to provide power to the controller from the power source and a second position opening the electrical circuit such that power from the power source is not supplied to the controller, and all of the acts are performed while the manual switch is placed in the first position.

In one or more additional aspects not according to the claimed invention, in a toothbrush as described in any of the preceding paragraphs, the controller may be configured to perform acts further comprising causing an end recording to play, via the speaker, after the second predetermined time.

In one or more additional aspects not according to the claimed invention, in a toothbrush as described in the preceding paragraph, the end recording may include an instruction to place the switch in the second position.

In one or more additional aspects not according to the claimed invention, in a toothbrush as described in either of the preceding two paragraphs, the controller may be configured to perform acts further comprising causing the end recording to repeat until the switch is placed in the second position.

In one or more additional aspects not according to the claimed invention, in a toothbrush as described in any of the preceding paragraphs, the controller may be configured to perform acts further comprising selecting the first of the plurality of sound recordings containing praise before causing the first of the plurality of sound recordings containing praise to play.

In one or more additional aspects not according to the claimed invention, in a toothbrush as described in the preceding paragraph, the selecting the first of the plurality of sound recordings containing praise may include randomly selecting the first of the plurality of sound recordings.

In one or more additional aspects not according to the claimed invention, in a toothbrush as described in any of the preceding paragraphs, the controller may be configured to perform acts further comprising selecting the first of the plurality of tooth brushing instructions from the plurality of tooth brushing instructions and selecting the second of the plurality of tooth brushing instructions from the plurality of tooth brushing instructions not including the first of the plurality of tooth brushing instructions.

In one or more additional aspects not according to the claimed invention, in a toothbrush as described in the preceding paragraph, the selecting the first of the plurality of tooth brushing instructions from the plurality of tooth brushing instructions may include randomly selecting the first of the plurality of tooth brushing instructions.

In another aspect of this disclosure not according to the claimed invention, a method of controlling an oral care implement having an audio output device and a movable cleaning element driven by a motor, includes (a) receiving an instruction to commence a cleaning sequence; (b) playing, via the audio output device, an audio instruction relating to oral cleaning; (c) after completion of playing the audio instruction relating to oral cleaning, controlling the motor to drive the oral cleaning element; (d) a predetermined time after operating the motor to drive the oral cleaning element, controlling the motor to stop driving the oral cleaning element; and (e) at least in part in response to controlling the motor to stop driving the oral cleaning element, playing, via the audio output device, a recording containing praise.

In one or more additional aspects not according to the claimed invention, in a method as described in the preceding paragraph, repeating steps (b) - (e).

In one or more additional aspects not according to the claimed invention, in a method as described in the preceding two paragraphs, steps (b) - (e) may be repeated a number of times corresponding to a number of audio instructions relating to oral cleaning.

In one or more additional aspects not according to the claimed invention, in a method as described in either of the preceding two paragraphs, the audio instruction relating to oral cleaning may be different for each repetition of step (b).

In one or more additional aspects not according to the claimed invention, in a method as described in any of the preceding three paragraphs, the recording containing praise is different for each repetition of step (e).

In one or more additional aspects not according to the claimed invention, in a method as described in any of the preceding five paragraphs, the receiving the instruction to commence a brushing sequence may comprise activation of a switch by the user.

In one or more additional aspects not according to the claimed invention, in a method as described in the preceding paragraph, the switch may be a mechanical switch that completes a circuit to provide power to the motor.

In one or more additional aspects not according to the claimed invention, in a method as described in any of the preceding seven paragraphs, a user may receive and instruction to end the cleaning sequence; and the transmission of power to the motor may be disconnected.

In one or more additional aspects not according to the claimed invention, in a method as described in the preceding paragraph, the receiving the user instruction to end the cleaning sequence may include activation of a switch by the user, and the activation of the switch opens a circuit that provides power to the motor.

In one or more additional aspects not according to the claimed invention, in a method as described in any of the preceding nine paragraphs, the recording containing praise may be one of a plurality of recordings containing praise.

In one or more additional aspects not according to the claimed invention, in a method as described in the preceding paragraph, the recording containing praise may be selected from among the plurality of recordings containing praise.

In one or more additional aspects not according to the claimed invention, in a method as described in the preceding paragraph, the selecting the recording containing praise from among the plurality of recordings containing praise may include randomly selecting the recording containing praise.

In one or more additional aspects not according to the claimed invention, in a method as described in the preceding paragraph, the selecting the recording containing praise from among the plurality of recordings containing praise may include selecting the recording containing praise in accordance with a predetermined order.

In one or more additional aspects not according to the claimed invention, in a method as described in any of the preceding thirteen paragraphs, via the audio output device, an end recording may be played instructing the user to power off the toothbrush.

In one or more additional aspects not according to the claimed invention, in a method as described in the preceding paragraph, the end recording may be repeated until the toothbrush is powered off.

The claimed invention relates to a toothbrush including: an elongate body; a head disposed at a distal end of the body; one or more tooth cleaning elements at the head, movable relative to the body; a motor operably connected to the one or more tooth cleaning elements to move the one or more tooth cleaning elements; a controller for controlling the motor;
a speaker disposed in the elongate body; a power source providing power to the motor and the controller; a speaker; and memory storing a plurality of tooth brushing instructions and a plurality of sound recordings containing praise, wherein the controller is configured to execute a method comprising:
(a) receiving an indication to commence a cleaning sequence;
(b) playing, via the speaker, an audio instruction relating to oral cleaning;
(c) after completion of playing the audio instruction relating to oral cleaning, controlling the motor to drive the cleaning element;
(d) a predetermined time after operating the motor to drive the cleaning element, controlling the motor to stop driving the cleaning element; and
(e) at least in part in response to controlling the motor to stop driving the cleaning element, playing, via the speaker, a recording containing praise.

Further areas of applicability of the present disclosure will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1A is a top, front perspective view of an oral care device according to an example implementation of this disclosure;
FIG. 1B is a bottom, rear perspective view of the oral care device depicted in FIG. 1A; and
FIG. 2 is a section view of the oral care device illustrated in FIGS. 1A and 1B, taken along section line 2-2 in FIG. 1A.
FIG. 3 is a schematic representation of a controller for use in an oral care device, such as the device illustrated in FIGS. 1A, 1B, and 2.
FIG. 4 is a flow chart illustrating an example method of operating an oral care device, which may be the device illustrated in FIGS. 1A, 1B, and 2.

### DETAILED DESCRIPTION

The following description of the preferred embodiments is merely exemplary in nature and is in no way intended to limit the disclosure, its application, or uses.

As used throughout, ranges are used as shorthand for describing each and every value that is within the range. Any value within the range can be selected as the terminus of the range. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

This disclosure relates generally to oral care implements, and more particularly to powered oral care implements embodied as toothbrushes or other elongate tooth cleaning members. Although certain embodiments and benefits will be described, other implementations, modifications, and/or benefits will be appreciated those having ordinary skill in the art, with the benefit of this disclosure.

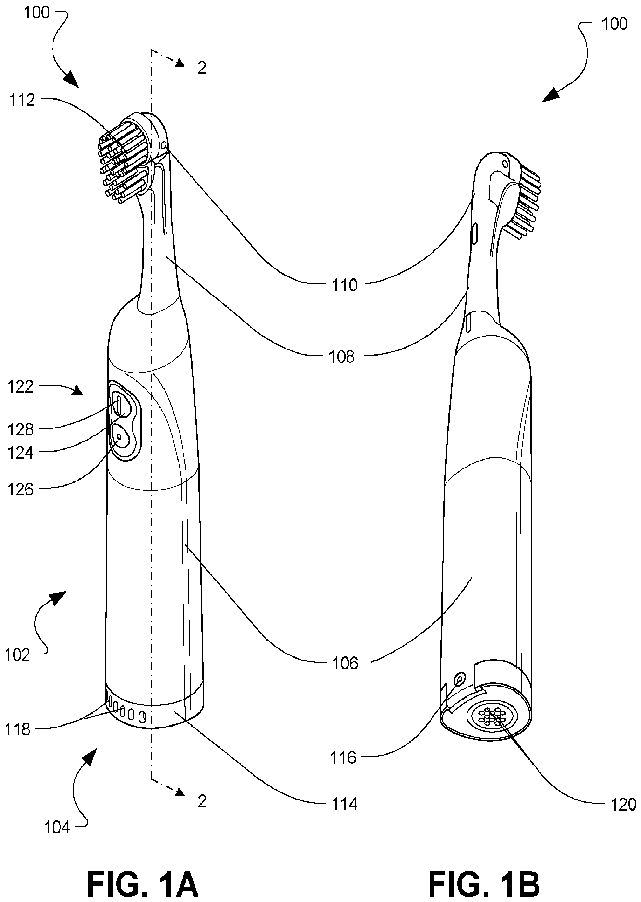

FIGS. 1A and 1B illustrate an oral care device according to implementations of this disclosure. More specifically, those figures are perspective views of an electric-powered toothbrush 100. The toothbrush 100 includes an elongate body 102 extending from a proximal end 104 to a distal end. The body 102 includes a handle 106 and a neck 108. A head 110 is disposed at the distal end of the elongate body 102, at the neck 108. The head 110 supports a plurality of tooth cleaning elements 112. The tooth cleaning elements 112 may be bristles, rubber or polymeric protrusions, or the like. As used herein, the term "tooth cleaning elements" is used in a broad generic sense to refer to any structure that can be used to clean, polish, scrape, whiten, or otherwise interact with the teeth and/or soft oral tissue (e.g., the tongue, the cheek, the gums, etc.) through relative surface contact. Examples of tooth cleaning elements that may be used include, but are not limited to, bristle tufts, filament bristles, fiber bristles, nylon bristles, spiral bristles, rubber bristles, elastomeric protrusions, flexible polymer protrusions, and combinations thereof. Suitable elastomeric materials may include biocompatible resilient materials suitable for use in an oral hygiene apparatus. The tooth cleaning elements 112 may be attached to the head 110 using any suitable method. For example, and without limitation, in-mold tufting or anchor-free tufting may be used to mount the cleaning elements. This disclosure is not limited by the types of tooth cleaning elements 112 or any method of anchoring such tooth cleaning elements 112 to the head 110.

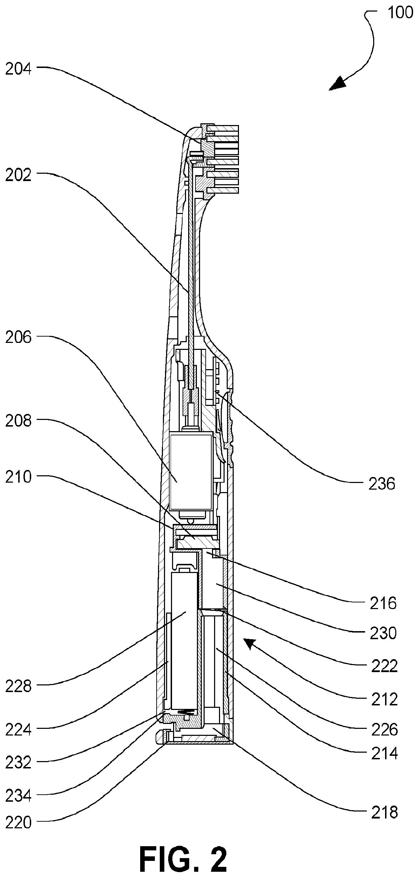

In some embodiments, the head 110 may be detachably mounted to the elongate body 102, for example, to form a replaceable unit or refill such that the user may replace the head after the tooth cleaning elements 112 have been worn. Removal of the head 110 from the elongate body 102 may also allow for the use of different types of tooth cleaning elements 112 with the body 102 or for use of the same body 102 by multiple people. As will be described in more detail below with reference to FIG. 2, in some embodiments the head 110 may include movable features which may allow for relative movement of the tooth cleaning elements 112. For example, some or all of the tooth cleaning elements 112 may move relative to portions of the head 110.

The toothbrush 100 also includes a base 114 at the proximal end 104. In the embodiment depicted in FIGS. 1A and 1B, the base 114 may be removable from the body 102. For example, the base 114 may comprise a cartridge that is selectively removable from a cavity formed as a receptacle in the proximal end of the handle 106. In some embodiments, the base 114 may be removable to access batteries, e.g., for recharging or replacing. As best seen in FIG. 1B, a fastener 116, such as a screw, retains the base 114 in the handle 106. Additional or alternative features also may be provided to promote retention and removal of the base 114 in and from the base 114. Several such features are conventional in the art.

One or more lateral openings 118 also are provided in the base 114. As will be described in more detail below, the openings 118 may be audio openings communicating with an audio chamber that may direct and/or amplify sound emitted from a speaker (not shown in FIGS. 1A and 1B) disposed in the toothbrush 100. Axial openings 120 also are provided, as best shown in FIG. 1B. The axial openings extend through the base 114 to communicate with the audio chamber, as will be described in more detail, below.

The toothbrush 100 also is illustrated as including a user interface 122. A user interacts with the user interface 122 to control the toothbrush. The user interface 122 may include switches, buttons, actuators, or other interface mechanisms through which the user may control functions of the toothbrush 100. For instance, the user interface 122 is illustrated as including a first button 124 and a second button 126. In some implementations, the first button 124 or the second button 126 may be used to power the toothbrush on and off, e.g., by providing power to a motor to drive the tooth cleaning elements 112. One of the buttons 124, 126 may also be used to power on and off audio functionality associated with the device. Other uses for the buttons 124, 126, as well as other or additional buttons, switches, actuators, and the like also will be understood by those having ordinary skill in the art, with the benefit of this disclosure. For example, but without limitation, one or more of the buttons 124, 126 may be used to cycle through or otherwise select a brushing mode for the toothbrush 100. The toothbrush 100 may be preprogrammed with a number of oscillation patterns or other movement patterns, each of which may promote oral care. In still other embodiments, the buttons 124, 126 may be used to adjust the volume of an audio output or otherwise control audio capabilities. The user interface 122 also is illustrated as including a visual indicator 128. The visual indicator 128 may be an LED or other light emitting device that may convey information. For example, the visual indicator may inform the user of a battery state of the device. In some implementations, the indicator 128 may be green when the battery is sufficiently charged, yellow as battery level begins to deplete in the device, and red when the battery is beyond its usable life. Similar or other indications may also be provided via the visual indicator 128 using other visual cues. For example, the visual indicator 128 may blink to convey information.

The toothbrush 100 may be constructed of a number of known materials or combinations of materials having suitable rigidity for conventional toothbrush use. For example, materials may be chosen for their rigidity for grasping and/or handling of the toothbrush and supporting the tooth cleaning elements 112. Suitable exemplary materials may be used in a toothbrush include, but are not limited to, hard plastics, such as polyethylene, polypropylene cone, polyimide, polyester, cellulosic, SAN, acrylic, ABS, and other thermoplastics suitable for toothbrush manufacture. The various portions and features the toothbrush 100 may be made of the same or different materials in various embodiments.

FIG. 2 is a cross-sectional view taken along section line 2-2 in FIG. 1A. As illustrated in FIG. 2, the body 102 including the handle 106 and the neck 108, as well as the head 110 are hollow, defining a plurality of cavities adapted to contain additional elements of the powered toothbrush 100. For example, an oscillator arm 202 is disposed in the neck and attaches at a distal end to an oscillating plate 204 on which a plurality of the tooth cleaning elements 112 are disposed. An opposite, proximal end of the oscillator arm 202 is coupled to an output arm of a motor 206, disposed in the body 102. Driving the motor 206 oscillates the oscillator arm 202, which in turn oscillates the oscillating plate 204. The result is movement of the tooth cleaning elements 112. As illustrated, the motor 206 may be powered by a power source, such as a battery 228 disposed in the handle 106.

A speaker 208 also is disposed in the body 102, spaced from the proximal end 104 of the body 102. In the illustration, the speaker 208 is mounted to a support 210, and the support 210 is fixed relative to a sidewall of the handle 106. The speaker is arranged to project sound waves generally along the axial direction, toward the proximal end 104.

An audio chamber 212 is provided between the speaker 208 and the proximal end 104 of the body 102. The audio chamber 212 generally is an elongate opening that directs sounds waves emitted from the speaker 208. In the configuration of FIG. 2, the speaker is disposed to emit sound in a direction generally along a longitudinal axis of the toothbrush 100, toward the proximal end 104. The audio chamber 212 is bounded by one or more sidewalls 214 extending between a first opening 216 proximate the speaker 208 and a second opening 218 proximate the proximal end 104 of the body 102. The first and second openings 216, 218 are spaced along the longitudinal axis of the toothbrush 100. In other embodiments, the audio chamber may be tipped, tilted, rotated, or otherwise configured. Moreover, interior surfaces of the sidewall 214 may be tapered or otherwise contoured such that the audio chamber 212 has relatively narrower and wider segments along the longitudinal direction. For example, in some implementations and without limitation, the audio chamber may be relatively narrower proximate the first opening 216 and relatively wider proximate the second opening 218, e.g., such that the chamber 212 is substantially frusto-conical. In preferred embodiments, however, the audio chamber 212 is arranged to direct sound waves emitted from the speaker 208 toward the proximal end 104.

Also illustrated more clearly in FIG. 2, the lateral openings 118 are formed through the sidewall of the base 114 near the proximal end 104. The openings 118 extend from an outer surface of the base 114 into the audio chamber 212. Accordingly, the openings 118 provide a passageway from inside the audio chamber to outside the toothbrush 100. The axial openings 120 provide a similar passageway. More specifically, the axial openings 120 extend from an exterior surface of an end 220 covering the second opening 218 of the audio chamber 212 into the audio chamber. In this arrangement, sound emitted from the speaker 208 is directed into the audio chamber 212 and out the lateral openings 118 and axial openings 120 at the proximal end 104. The audio chamber 212 may act as a mechanical amplifier, e.g., a resonance chamber, to amplify the sound emitted from the speaker. In other embodiments, the lateral openings 118 and/or the axial openings 120 may not be provided, and the sound may exit the body 102 through the second opening 218, e.g., out the bottom of the handle. In such an embodiment, the base 114 may not include the end 220, or the end 220 may include a larger aperture than the axial openings, e.g., the same size as or bigger than the second opening 218.

In addition to amplifying the sound, the audio chamber 212 also allows placement of the sound outlet at a location spaced from the speaker. This may beneficially allow sound to exit the toothbrush at locations less likely to be covered or muffled during brushing. For example, it is unlikely that a user would hold the toothbrush 100 during use in a manner that covers either the lateral openings 118 or the axial openings 120, and it is even less likely that a user would cover both the lateral openings 118 and the axial openings 120. In alternative embodiments, the audio chamber 212 could be shorter, or the holes could be provided nearer the user interface 120. In that location, however, a user may be more likely to grip the toothbrush in a manner that covers the speaker 208.

The audio chamber 212 also may protect the speaker and/or other electronics also allows for placement of the speaker 208 farther from any opening through which water, toothpaste, or other elements that may have a negative effect on the speaker may enter the toothbrush. In some embodiments, the lateral openings 118 and/or the axial openings 120 may be through holes, and water or other foreign substances may enter the audio channel 212 via those openings. However, the length of the audio chamber 212 will provide some deterrent to foreign substances reaching the speaker.

Although not required, in some embodiments, a physical barrier may also be provided in the audio chamber, e.g., to prevent contamination. For instance, FIG. 2 illustrates a membrane 222 provided in the audio chamber 212. The membrane 222 extends across the opening of the audio chamber 212, e.g., to occlude the audio chamber 212. The membrane 222 preferably allows sound to pass, but inhibits contaminants such as water, toothpaste, and the like from traversing the audio chamber 212 and contacting the speaker or other elements disposed in the toothbrush 100. In some implementations, the membrane 222 may be formed of a liquid-impermeable, but sound-permeable material. The membrane 222 may also be vapor or gas-permeable, e.g., to allow off gasses, such as hydrogen, from the electronic components to exhaust to the atmosphere. For example, the membrane 222 may comprise polytetrafluoroethylene, although other materials, including but not limited to micro-perforated materials or woven materials may also be used. In still other embodiments, the membrane 222 may be a more rigid material, with holes formed therethrough. For example, holes may be axially formed through the membrane 222.

The membrane 222 may be disposed at any position between the first opening 216 and the second opening 218 of the audio chamber. Moreover, more than one membrane may be provided. The membrane 222 may be attached to the audio chamber using any number of conventional methods. For example, but without limitation, the membrane 222 may be fixed by adhesion, welding, e.g., ultrasonic welding, or mechanical means. As noted above, the membrane 222 is optional, and may not be provided in some implementations.

As noted above, the base 114 may be separable from the handle 106. In the illustrations, the base 114 is formed as a cartridge that is selectively receivable in a receptacle formed in the proximal end of the handle 106. The base 114 generally includes the end 220 formed as a substantially planar cap, a battery compartment 224, and a proximal portion 226 of the audio chamber 212. The base 114 may be completely separable from the handle 106, or it may be slidable, pivotable, or otherwise movable relative to the handle. The base and the handle may also have complementary features that prevent complete removal of the base 114 from the handle 106. Such features may include a catch, a stop, of the like. An arrangement that is not completely separable may be desirable when elements connect to features on both the base 114 and in the body 102. For example, electrical leads may contact the battery in the base 114 and extend to the speaker 208 in the handle 106.

The battery compartment 224 is sized to receive one or more batteries 228 for powering the toothbrush 100. Battery contacts may also be provided in the battery compartment 224. The batteries 228 may be any conventional power source, including but not limited to dry cell batteries, rechargeable batteries, or the like.

The proximal portion 226 of the audio chamber 212 is aligned with a distal portion 230 of the audio chamber 212 to form the complete audio chamber 212 when the base 114 is disposed in the handle 106. In alternative embodiments, the proximal portion 226 and the distal portion 230 of the audio chamber 212 may be relatively longer and/or shorter. The membrane 222, when present, may be disposed over an open end of the proximal portion 226 or over an open end of the distal portion 230 of the audio chamber 212. Alternatively, the membrane 222 may be disposed at any distance spaced along either the proximal portion 226 or the distal portion 230. When the membrane 222 is disposed to cover one of the proximal portion 226 or the distal portion 230, the membrane 222 may also act as a seal between the proximal portion 226 and the distal portion 230. For example, an open edge of the proximal portion 226 or the distal portion 230 that does not include the membrane 222 may contact the membrane when the base 114 is received in the handle 106. Additionally or alternatively, a seal, such as an O-ring or the like, including a foam O-ring, may be arranged between the proximal portion 226 and the distal portion 230 to prevent flow of contaminants and/or sound loss at the junction of the two portions 226, 230.

Additional seals also may be provided between the base 114 and the handle 106. For example, a seal 232, which may be an O-ring, may be retained in a circumferential slot 234 formed around the base 114. In alternative embodiments, the seal may be a sliding seal, a gasket, or any other seal between the base 114 and an internal surface of the body 102.

The toothbrush 100 may include additional features. For example, controls 236 may also be included, which may be in communication with the user interface 120. The controls 236 may include a printed circuit board, electronics, one or more processors, memory, a CPU, and/or hardware and/or other electronics, and may perform myriad functions. For example, the controls may include timing circuitry or programming that turns off the motor 206 after a certain amount of time. The controller may also or alternatively include one or more routines or programs that drive the motor, e.g., to move the tooth cleaning elements in a predetermined manner. The controls 236 may also include an audio source, which may include one or more audio files or recordings. The user may be able to choose an audio file in some embodiments from among audio stored in memory associated with the controller.

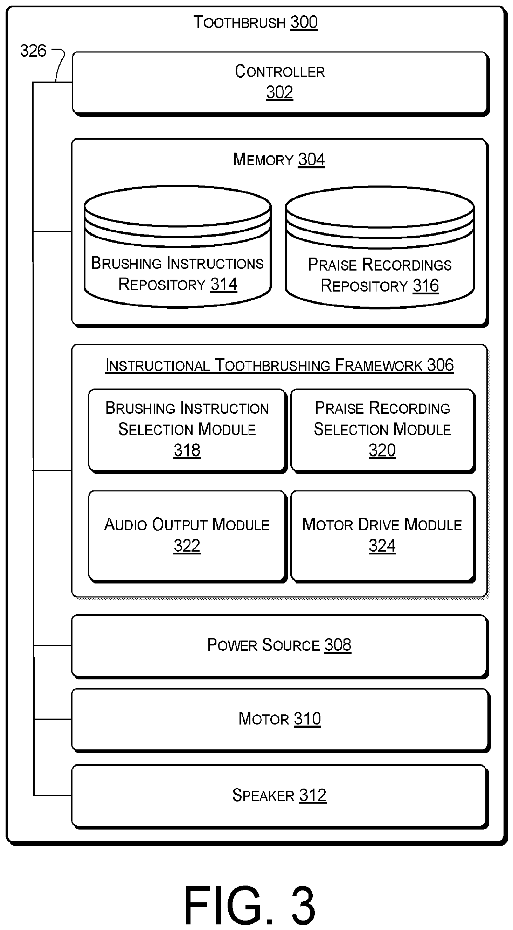

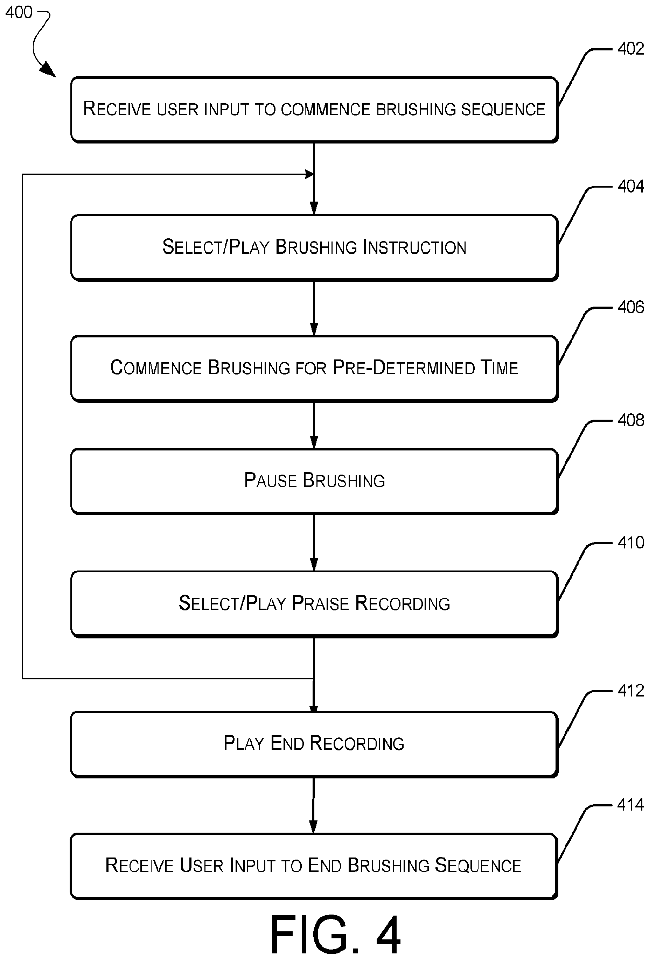

The controls 236 generally include computer, electrical, electromechanical and/or other devices and components that may be used to control functionality of the toothbrush 100. Examples of the controls 236 and methods of controlling a toothbrush, which may be the toothbrush 100 or any other toothbrush, will now be described with reference to FIGS. 3 and 4.

FIG. 3 is a schematic representation of a toothbrush 300, which may be the toothbrush 100, described above. However, the toothbrush 100 need not include all of the elements and/or functionality illustrated in FIG. 3, and methods described herein may be applied to oral care implements other than the toothbrush 100, as will be appreciated by those having ordinary skill in the art, with the benefit of this disclosure. FIG. 3. generally illustrates the electronic and electro-mechanical elements of the toothbrush 300, although it is understood that the toothbrush 300 also may include additional elements, including those that are conventional in oral care implements. By way of non-limiting example, the toothbrush 300 may include tooth cleaning elements, a grip, and the like, but those elements are not illustrated in FIG. 3. The toothbrush 300 is illustrated as including a controller 302, memory 304, an instructional tooth brushing framework 306, a power source 308, a motor 310, and a speaker 312.

The controller 302 may be any controller or controllers capable of executing steps or routines for controlling the toothbrush 300. By way of example and not limitation, the controller may include a microcontroller, logic circuitry, integrated circuits, a processor or microprocessor, hardware logic components, including but not limited to field-programmable gate arrays (FPGAs), application-specific integrated circuits (ASICs), application-specific standard products (ASSPs), system-on-a-chip systems (SOCs), complex programmable logic devices (CPLDs), and the like, as well as additional or alternative components. The controller preferably controls power from the power source 308, the motor 310, and/or the speaker 312, for example, as described below with reference to FIG. 4.

The memory 304 may be any non-transmission medium that can be used to store information for access. For example, the memory 304 may be embodied as read-only memory, although other types of storage media are known and may be used in some implementations. The memory 304 may be volatile or non-volatile, removable or non-removable implemented in any method or technology. As illustrated in FIG. 3, the memory 304 may include a brushing instructions repository 314 and a praise recordings repository 316.

The brushing instructions repository 314 preferably stores a number of pre-recorded audio instructions for brushing one's teeth. In some embodiments, the instructions may include specific directions to use the toothbrush to clean a certain section or feature of the mouth. For example, the brushing instructions may include directions including "brush the teeth in the top right section of your mouth" or "brush your tongue" or the like. In some embodiments, the directions may be more targeted to youth, such as, "brush your two front teeth, don't forget the backs." The instructions preferably are sufficient in number and content to instruct brushing of the entire oral cavity. Thus, a plurality of instructions may together from a complete set of instructions for brushing the entire oral cavity. In use, the set of brushing instructions may be played to the user, e.g., via the speaker 312. The brushing instructions comprising the set of instructions may be played in a pre-determined sequence to guide the user around the mouth with the toothbrush. In other implementations, the sequence of the instructions may vary, for example, the sequence may be randomized, although in preferred embodiments the complete set of instructions will be played, to ensure the user is instructed to brush everywhere in the oral cavity. More than one complete set of instructions may also be stored in the memory brushing instructions. Moreover, , or a complete set may be generated by the controller during use, e.g., by selecting one of a plurality of instructions telling a user to brush her front teeth, one of a plurality of instructions telling the user to brush her top right molars, and so forth. By providing additional instructions, sets of instructions, and allowing for selection of instructions, the toothbrush 300 may be able to vary the user experience from brushing-to-brushing.

The memory brushing instructions repository 314 also may store an end recording, such as "brushing complete." The end recording may also instruct the user to interact with the toothbrush, e.g., to power the toothbrush 300 off and/or place the toothbrush in a dock. The end recording may also instruct the user to perform additional oral health acts. For instance, the end recording may instruct the user to floss, to rinse, to spit, to limit sugar intake, or the like.

The praise recording repository 316 includes a number of recordings that include praise. The "praise recordings" may generally include any audio that congratulates, encourages, or otherwise praises the user. Praise phrases may include, but are not limited to "way to go," "those are sparkly," "you've done this before," "great job," and the like. In some embodiments, the praise phrases and/or the brushing instructions may be associated with a character or a theme. For example, all praise phrases may be done in the voice of a character or characters depicted on the toothbrush. The praise phrases may also include catch phrases of a character.

The brushing instructions and/or the praise recordings may be pre-selected and stored in the memory 304 prior to fabrication of the toothbrush 300. In other implementations, a user may be able to upload additional recordings. Although not illustrated, the toothbrush 300 may also include an interface, which may be wired or wireless, for receiving recordings from a source. The source may be a user's computing device or may be a manufacturer of the toothbrush 300.

The toothbrush 300 also includes an instructional tooth brushing framework 306 which may be used to instruct a user how to effectively brush his teeth using the toothbrush 300. The framework 306 includes functionality configured as one or more "modules." The term "module" is intended to represent example divisions of the functionality for purposes of discussion, and is not intended to represent any type of requirement or required method, manner or organization. Accordingly, while various "modules" are discussed, their functionality and/or similar functionality could be arranged differently (e.g., combined into a fewer number of modules, broken into a larger number of modules, etc.). Further, certain functions and modules may be implemented in whole or in part as hardware components, as software and/or firmware. Software and/or firmware modules may be stored in memory, such as the memory 304, and executable by a processor, which may be included in the controller 302 or otherwise provided. Modules, even when characterized as software, firmware or otherwise, are ultimately implemented in hardware, for example, within a programmed processor, FPGA, or other circuit, and this hardware may be located in the toothbrush 300. As illustrated in FIG. 3, the instructional tooth brushing framework 306 may include an audio instruction selection module 318, a praise recording selection module 320, an audio output module, and a motor drive module 324.

The brushing instruction selection module 318 may select a brushing instruction from the brushing instructions repository for playing to a user. As discussed above, brushing instructions may be stored in the brushing instructions repository 314 as one or more sets of discrete recordings, with each recording instructing the user to take a specific action. The set of recordings includes all instructions for complete care of the oral cavity. The brushing instructions selection module 318 may be configured to select a set from among a plurality of sets or to select specific recordings, whether or not associated with a set. In some embodiments, the brushing instructions selection module 318 may select recordings based on a predetermined order, e.g., such that the user is always instructed to first brush the top left section of her mouth, then the top right, and so forth. Alternatively, the brushing instructions selection module 318 may randomize the order of the instructions. For example, the user may be instructed at one brushing to follow a first pattern around the oral cavity and a second pattern at a next brushing. In one example, five brushing instructions may be stored, each associated with a different section of the oral cavity, and the brushing instruction selection module may, for a brushing sequence, select a first of the five instructions at random, then a second at random from among the four not-yet played during the sequence, and so forth.

The praise recording selection module 320 may select a praise recording from the praise recordings repository 316 for playing through the speaker 312. The praise recording selection module may select a praise recording based on a predetermined sequence of praise recordings, at random, or according to some other methodology.

The audio output module 322 may cooperate with the brushing instruction selection module 318, the praise recording selection module, the power source 308, and/or the speaker 312, to play the brushing instructions and/or the praise recordings via the speaker 312.

The motor drive module 324 may control functioning of the motor 310. For example, the motor drive module may instruct rotation of the motor after a user presses a switch on the toothbrush 300, e.g., to power on the toothbrush 300. In some embodiments, when the user turns on the toothbrush 300, e.g., by pushing a mechanical switch, a circuit is closed that supplies power automatically to the motor 310. The motor drive module 324 operates with this circuit to control the motor, even when the circuit is closed by the switch. The motor drive module may control the speed of the motor, for example.

The power source 308 may be any conventional power source that powers components of the toothbrush. Without limitation, the power source 308 may include batteries, including replaceable or rechargeable batteries. The power source 308 may be the power source 208, for example.

The motor 310 may be any conventional actuator used in oral care or other electro-mechanical devices. The speakers may be any conventional speaker 312. Moreover, the speaker 312 may be disposed in the toothbrush 300 as the speaker 208 described above, or in any other manner.

Components of the toothbrush 300 preferably are connected via electrical connections generally designated by numeral 326. The electrical connections 326 may include a bus, electrical leads, or any other wired or wireless transmission device that may provide operable communication between components of the toothbrush 300. In some implementations, the electrical connections 326 may be embodied as conductive tracks, vias, and the like, on a printed circuit board.

FIG. 4 is a flow chart illustrating a process 400 of controlling a toothbrush according to embodiments of this disclosure. The process 400 may be implemented using the toothbrush 100 or the toothbrush 300 or some other oral care device altogether. The operations of the example process 400 are illustrated in individual blocks and summarized with reference to those blocks. The process is illustrated as logical flows of blocks, each block of which can represent one or more operations that can be implemented in hardware, software, or a combination thereof. The order in which the operations are described is not intended to be construed as a limitation, and any number of the described operations can be executed in any order, combined in any order, subdivided into multiple sub-operations, and/or executed in parallel to implement the described processes.

At 402, the process 400 includes receiving a user input to commence a brushing sequence. The user input may include user operation of a switch, such as a mechanical toggle or push button switch. In some implementations, a circuit may be provided to power a motor of the toothbrush, and actuation of a switch by the user closes that circuit, thereby supplying power to the motor. The user may be required to actuate the switch again, to open the circuit, and turn off the toothbrush at the conclusion of the brushing sequence. The switch may be disposed on the body of the toothbrush, for example. In other embodiments, the user input may be by other than a switch. For example, the user input may be removal of the toothbrush from a docking station.

At 404, the process 400 plays a brushing instruction. For example, the brushing instruction may be one of a plurality of brushing instructions stored in memory, e.g., in the brushing instructions repository 314 and may be played by the speaker 312 via the audio output module 322. In some embodiments, the process 404 may also include selecting the brushing instruction from a plurality of brushing instructions. Algorithms and methods for selecting the brushing instruction may be carried out by the brushing instruction selection module 318, described above. The brushing instruction may be chosen at random, or according to a predetermined order.

At 406, the process 400 commences brushing for a pre-determined time. For example, the process 400 may instruct the motor drive module 324 to drive the motor to actuate the tooth cleaning elements for the predetermined time. As noted above, a user may commence a brushing sequence by closing a circuit that supplies power to the motor. However, it may be desirable to delay actuation of the toothbrush. For example, delaying actuation of the toothbrush may allow a user time to prepare to follow the instruction played at 404. By way of non-limiting example, the instruction played at 404 may be to "brush the top teeth in the back right of your mouth." A delay may allow the user to hear the instructions, comprehend the instructions, and place the toothbrush in the proper location and orientation before the bristles are actuated. In conventional powered toothbrushes, turning the power on immediately starts the actuation, which may lead to loss of toothpaste as the user places the actuating toothbrush in her mouth.

At 408, the process 400 pauses brushing. For example, the motor may be controlled again to stop actuation of the tooth cleaning elements. As noted with respect to 406, the brushing is for a predetermined time and the pausing at 408 is after that predetermined time. The predetermined time may be a set time, or it may be dependent upon the instruction played at 404. For example, if the user is instructed at 404 to brush all of her top teeth, the predetermined time may be longer than if she is instructed to brush only her two front teeth. Similarly, the time provided to brush one's tongue may be less than a time to brush several teeth.

At 410, a praise recording is played, e.g., to congratulate or encourage reaching the end of the predetermined time. For example, the praise recording may be played through the speaker, via the audio output module 322. The praise recording may be selected, e.g., using the praise recording selection module 320, from a memory storing praise recordings, e.g., the praise recordings repository 316. The praise recording may be randomly selected, e.g., such that the user has a unique experience each time he brushes his teeth.

404, 406, 408, and 410 may be repeated one or more times. With each iteration, the brushing instruction played at 404 will vary. The praise recording played at 410 also may vary for each iteration. In one example, the user may be instructed at a first iteration of 404 to brush the teeth in the bottom right section of her mouth, at a second iteration the bottom left, at a third iteration the top left, at a fourth iteration the top right, and at a fifth iteration her tongue. More or fewer iterations may be used, for example, depending upon the brushing instructions. In preferred embodiments, sufficient iterations are performed that the entire oral cavity is cleaned.

At 412, after one or more iterations of 404, 406, 408, and 410, the process 400 may play an end recording. The end recording may be played through the speaker, via the audio output module. The end recording may include a praise phrase. In some embodiments, the end recording may remind a user to perform additional oral hygiene-related tasks, e.g., "don't forget to rinse," or the like. The end recording also may instruct the user to turn off the toothbrush. As described above, in some instances power may continue to be provided to the motor until a switch is actuated to open a power circuit. The end recording may remind the user to actuate the switch, to stop this flow of power.

At 414, the process 400 receives a user input to end the brushing sequence. As described above, the user input may be activation of a switch. In other implementations, the user input may include the user placing the toothbrush on a docking station or the like. In still other embodiments, process step 414 may not be necessary, as the toothbrush may automatically end the sequence, e.g., by powering down. In implementations in which a switch must be actuated to power off the toothbrush, process step 412 may be repeated until the user input to end the brushing sequence is received at 414.

The toothbrush 100 illustrated in FIGS. 1A, 1B, and 2 and the toothbrush 300 may be manufactured as a number of pieces and then assembled. As noted above, the base may be separable from the body 102. In addition, a chassis or other mounting structure may carry or support several features of the toothbrush, including but not limited to the motor 206, the controller 236, switches operable via the user interface 120, the speaker 208, and/or the audio chamber 212. For example, the support 210 may be part of a larger chassis that is pre-assembled for subsequent placement in the toothbrush 100 cavity. Forming the electronic and control elements as a separate assembly may allow for easier manufacturing, assembly, and/or testing.

Modifications to the toothbrush 100 also are anticipated, and the disclosure is not limited to the embodiments in the Figures. For example, although the speaker is illustrated as being fixed in the body 102, such is not required. The speaker may be mounted on the base 104. As required, electrical contacts or the like may be provided to promote electrical connection of the speaker to the controller.

In other implementations, the base 114 may include fewer components. For example, the base may include only one, or neither, of the battery compartment or the proximal portion of the 226 of the audio chamber. In some embodiments, the base 114 may only include the end 220. Removal of the base 114 may allow a user to insert batteries into the handle 106, for example. Moreover, the entirety of the audio chamber may be fixed in the body 102.

In other implementations, one or more sensing devices, including but not limited to position or movement sensors, e.g., accelerometers, moisture sensors, or the like, may be provided on the toothbrush. By way of non-limiting example, U.S. Patent No. 8,272,091, issued September 25, 2012, for an "electric toothbrush and method for controlling thereof, describes methods for detecting orientation of bristles on a toothbrush. In some implementation, the position or movement sensors may be able to provide feedback about whether the tooth brushing instructions are being followed appropriately. In some instances, a feedback loop may be used to send information from the sensing devices to the controller, for example, to provide real-time correction to the user. Instructions may be replayed, such that the user will be prompted to brush an area of the oral cavity again, for example. In some implementations, the position or moisture sensor may be used, e.g., in place of or in connection with, a manual switch, to commence the brushing sequence, e.g., by detecting that the toothbrush is in the oral cavity and ready for use.

## Claims

1. A toothbrush (100) comprising:
an elongate body (102);
a head (110) disposed at a distal end of the body (102);
one or more tooth cleaning elements (112) at the head (110), movable relative to the body (102);
a motor (206) operably connected to the one or more tooth cleaning elements (112) to move the one or more tooth cleaning elements (112);
a controller (302) for controlling the motor (206);
a speaker (208) disposed in the elongate body (102);
a power source (228, 308) providing power to the motor (206) and the controller (302); and
a memory (304) storing a plurality of tooth brushing instructions and a plurality of sound recordings containing praise,
wherein the controller (302) is configured to execute a method comprising:
(a) receiving an indication to commence a cleaning sequence;
(b) playing, via the speaker (208), an audio instruction relating to oral cleaning;
(c) after completion of playing the audio instruction relating to oral cleaning, controlling the motor (206) to drive the cleaning element (112);
(d) a predetermined time after operating the motor (206) to drive the cleaning element (112), controlling the motor (206) to stop driving the cleaning element (112); and
(e) at least in part in response to controlling the motor (206) to stop driving the cleaning element (112), playing, via the speaker (208), a recording containing praise.

## Patentansprüche

1. Zahnbürste (100), die umfasst:
einen langgestreckten Körper (102);
einen Kopf (110), der an einem distalen Ende des Körpers (102) angeordnet ist;
ein oder mehrere Zahnreinigungselement(e) (112) an dem Kopf (110), das/die relativ zu dem Körper (102) bewegbar ist/sind
einen Motor (206), der betriebsmäßig mit dem einen oder den mehreren Zahnreinigungselement(en) (112) verbunden ist, um das eine oder die mehreren Zahnreinigungselement(e) (112) zu bewegen;
eine Steuerung (302) zur Steuerung des Motors (206);
einen Lautsprecher (208), der in dem langgestreckten Körper (102) angeordnet ist;
eine Energiequelle (228, 308), die den Motor (206) und die Steuerung (302) mit Energie versorgt; und
einen Speicher (304), der eine Mehrzahl von Zahnputzbefehlen und eine Mehrzahl von Tonaufzeichnungen, die ein Lob enthalten, speichert, wobei die Steuerung (302) konfiguriert ist, ein Verfahren auszuführen, das umfasst:
(a) Empfangen einer Anzeige zum Starten einer Reinigungssequenz;
(b) Abspielen eines eine Mundreinigung betreffenden Audio-Befehls über den Lautsprecher (208);
(c) nach Abschluss des Abspielens des eine Mundreinigung betreffenden Audio-Befehls, Steuern des Motors (206), um das Reinigungselement (112) anzutreiben;
(d) eine vorbestimmte Zeit nach dem Betreiben des Motors (206) zum Antreiben des Reinigungselements (112), Steuern des Motors (206), um den Antrieb des Reinigungselements (112) zu stoppen; und
(e) zumindest teilweise in Reaktion auf das Steuern des Motors (206), um den Antrieb des Reinigungselements (112) zu stoppen, Abspielen einer Aufzeichnung, die Lob enthält, über den Lautsprecher (208).

## Revendications

1. Brosse à dents (100) comprenant:
un corps allongé (102);
une tête (110) disposée à une extrémité distale du corps (102);
un ou plusieurs éléments de nettoyage de dents (112) au niveau de la tête (110), mobiles par rapport au corps (102);
un moteur (206) connecté fonctionnellement au(x) éléments de nettoyage de dents (112) pour déplacer le ou les éléments de nettoyage de dents (112);
un dispositif de commande (302) destiné à commander le moteur (206);
un haut-parleur (208) disposé dans le corps allongé (102);
une source d'alimentation électrique (228, 308) fournissant une puissance au moteur (206) et au dispositif de commande (302); et
une mémoire (304) stockant une pluralité d'instructions de brossage de dents et une pluralité d'enregistrements sonores contenant une éloge,
dans lequel le dispositif de commande (302) est conçu pour exécuter le procédé consistant à:
(a) recevoir une indication pour commencer la séquence de nettoyage;
(b) lire, par l'intermédiaire du haut-parleur (208), une instruction audio associée au nettoyage buccal;
(c) après que la lecture de l'instruction audio associée au nettoyage buccal est terminée, amener le moteur (206) à entraîner l'élément de nettoyage (112);
(d) une durée prédéterminée après le fonctionnement du moteur (206) pour entraîner l'élément de nettoyage (112), amener le moteur (206) à arrêter l'entraînement de l'élément de nettoyage (112); et
(e) au moins en partie en réponse à la commande du moteur (206) pour arrêter l'entraînement de l'élément de nettoyage (112), lire, par l'intermédiaire du haut-parleur (208), un enregistrement contenant une éloge.
